# EUROPEAN PATENT SPECIFICATION

(11) **EP 3 564 970 B1**
(45) Date of publication and mention of the grant of the patent: **12.03.2025**
(21) Application number: 17927143.2
(22) Date of filing: 28.09.2017
(51) Int. Cl.: H01B 7/14, H01B 7/22

(54) **SINGLE-CORE SUBMARINE CABLE**
EINZELADER-UNTERWASSERKABEL
CÂBLE SOUS-MARIN À ÂME UNIQUE

(30) Priority: 27.09.2017 CN 201710892817
(43) Date of publication of application: 06.11.2019
(73) Proprietor: Zhongtian Technology Submarine Cable Co., Ltd., Nantong, Jiangsu 226010 (CN)
(72) Inventor: WANG, Liyuan, Nantong Jiangsu 226463 (CN); ZHANG, Jianmin, Nantong Jiangsu 226463 (CN); ZHAO, Youlin, Nantong Jiangsu 226463 (CN); YE, Cheng, Nantong Jiangsu 226463 (CN); WANG, Wenchao, Nantong Jiangsu 226463 (CN); XUE, Jianlin, Nantong Jiangsu 226463 (CN); XIE, Shuhong, Nantong Jiangsu 226463 (CN)
(74) Representative: Zaboliene, Reda
(86) International application number: PCT/CN2017/104048
(87) International publication number: WO 2019/061176

(56) References cited:
- WO-A1-2009/079920
- CN-A- 101 807 450
- CN-A- 102 969 071
- CN-A- 106 094 145
- CN-A- 106 094 145
- CN-A- 106 098 238
- CN-U- 205 789 189
- CN-U- 205 789 189
- CN-U- 205 789 190
- CN-U- 205 911 042
- CN-U- 205 911 042
- US-A1- 2012 234 596
- US-A1- 2012 234 596

## Description

### FIELD

The subject matter herein generally relates to a single core submarine cable.

### BACKGROUND

A single core submarine cable transmitting and distributing electric energy through a single conductor is convenient for line connection and equipment connection. Such cable can be used undersea, for supplying electrical power to coastal cities and transmitting power generated by offshore wind power. The reset route of a submarine cable is designed in multiple sections and is complex, the local undersea environment and working conditions will affect the carrying capacity of the cable. There are bottleneck sections in the reset route where the carrying capacity cannot meet the current requirements for which it is rated. As a result, one submarine cable cannot guarantee that every section of a route meets the requirement of current rating.

Reducing electrical loss through armor is an effective way to improve the carrying capacity of a submarine cable. Common types of armor includes galvanized steel wire and copper wire, the galvanized steel wire armor has high resistance, large loss through armor, and low carrying capacity. Copper wire armor has low resistance and high corrosion resistance, but has mechanical strength lower than the galvanized steel wire armor, and is expensive.

CN205789189U discloses a submarine cable a single core submarine power cable which includes a wire core, a shielding layer, an insulating layer, an insulator shielding layer, a lead sleeve, an inner protective layer, an armor layer, and an outer protective layer arranged from the inside to the outside. The armor layer is formed by twisting a plurality of metal wires. The armor is divided into a first armor layer for land and a second armor layer for underwater, an end of the first armor layer is butted with an end of the second armor layer to form an integrated armor layer.

CN106094145A discloses a submarine optical cable which uses a fiber reinforced material and a galvanized steel wire material to form an armor layer. By adjusting a combination ratio of the fiber reinforced material and galvanized steel wire material, a weight of the submarine optical cable is adjustable.

### SUMMARY OF THE INVENTION

The present disclosure provides a single core submarine cable having the characteristics of adjustable carrying capacity, low loss through armor, high mechanical strength, and corrosion resistance.

The invention is set out in the appended set of claims. In relation to the constant sum of number, an increase in the number of the first metal wires, reduces the resistance of the armor, the loss through armor is reduced, and the carrying capacity is increased, so the carrying capacity of the cable in the bottleneck section will be sufficient to meet the requirements of rated currents. In relation to the current rating, an increase of the number of the second metal wires improves the mechanical strength, and the cost is reduced. The carrying capacity of the single core submarine cable of the present disclosure can be controlled and adjusted, and meet the requirements of rated currents in the bottleneck section route. Each single core submarine cable can meet the requirements of the rated current in multi-section routes located in different areas and environments, and mechanical strength and cost are optimized. The single core submarine cable is very maneuverable, and construction is convenient. The amount of material used for the single core submarine cable is not significantly extra.

### BRIEF DESCRIPTION OF THE DRAWINGS

Implementations of the present technology will now be described, by way of example only, with reference to the attached figures.
FIG. 1 is an isometric view of a first section of a single core submarine cable according to the invention.
FIG. 2 is an isometric view of a second section of a single core submarine cable according to the invention.
FIG. 3 is an isometric view of a first protecting layer of the single core submarine cable according to the invention.
FIG. 4 is an isometric view of a fiber unit of the single core submarine cable according to the invention.

In the attached figures, single core submarine cable is labeled 100, cable core is labeled 10, inner protecting layer is labeled 20, armor layer is labeled 30, first metal wire is labeled 31, second metal wire is labeled 32, outer protecting layer is labeled 40, conductor shielding layer is labeled 21, insulation layer is labeled 22, insulation shielding layer is labeled 23, first protective layer is labeled 50, water-resistant tape winding layer is labeled 51, metal protective layer is labeled 52, polyethylene protective layer is labeled 53, lining layer is labeled 54, filling protective layer is labeled 55, fiber unit is labeled 56, fiber is labeled 56-a, water-resisting ointment is labeled 56-b, stainless steel tube is labeled 56-c, and plastic protective layer is labeled 56-d.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

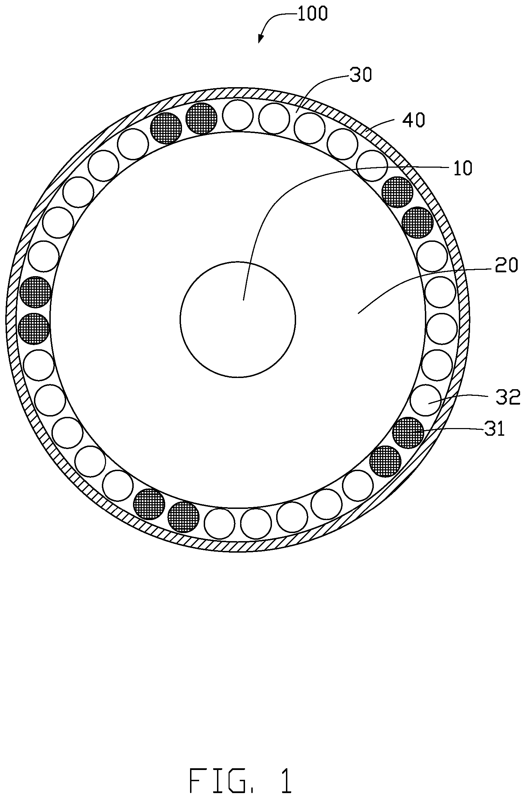

FIG. 1 illustrates a single core submarine cable 100. The cable 100 includes a cable core 10, an inner protecting layer 20 positioned outside of the cable core 10, and an armor layer 30 positioned outside of the inner protecting layer 20. The single core submarine cable 100 is used for underwater power transmission, for example, supplying power to coastal cities and transmitting power generated by offshore wind power. The armor layer 30 includes first metal wires 31 and second wires 32 with a constant sum of number. The number of the first and second metal wires is different at least between a first section and a second section.

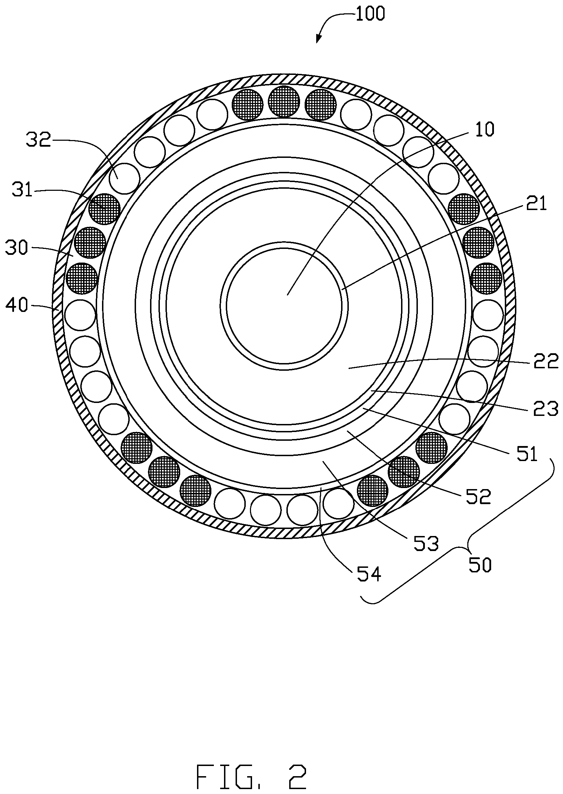

FIGS. 1 and 2 illustrate the cable core 10 being positioned at the center of the single core submarine cable 100. The cable core 10 includes a water-resistant conductor and a water-resistant filling material positioned in gaps of the water-resistant conductor. The water-resistant conductor is the carrier of electrical current in the single core submarine cable 100. The water-resistant filling material is gap filler material. The water-resistant filling material protects the water-resistant conductor. The water-resistant conductor is in the form of round compacted strand or shaped line. The water-resistant filling material is water-resistant tape, water-resistant powder, water-resistant yarn, water-resistant glue, or a combination thereof.

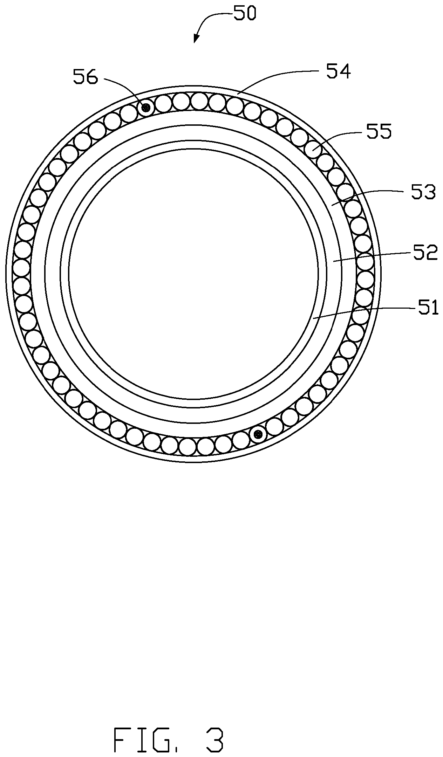

FIGS. 2 and 3 illustrate that the inner protecting layer 20 is positioned outside of the cable core 10. The inner protecting layer 20 acts as shielding, as insulation, and as protection for the cable core 10. The inner protecting layer 20 includes a conductor shielding layer 21, an insulation layer 22, an insulation shielding layer 23, and a first protective layer 50 arranged in that order from the inside to the outside. The conductor shielding layer 21 is formed by wrapping a semi-conductive binding water-resistant tape and extruding an ultra-smooth semi-conductive shielding material. The insulation layer 22 is formed on the conductor shielding layer 21 by an even extrusion of the ultra-clean cross-linked polyethylene material. The insulation shielding layer 23 is formed on the insulation layer 22 by directly extruding the ultra-smooth semi-conductive shielding material. The first protective layer 50 includes a water-resistant tape winding layer 51, a metal protective layer 52, a polyethylene protective layer 53, and a lining layer 54 arranged in that order from the inside to the outside. The water-resistant tape winding layer 51 is formed on the insulation shielding layer 23 by overlapping in wrapping semi-conducting resistant tape. The metal protective layer 52 is a continuous sealing structure, formed on the water-resistant tape winding layer 51 by directly extruding the lead alloy material. The polyethylene protective layer 53 is formed on the metal protective layer 52 by directly extruding semi-conductive polyethylene or insulating polyethylene thermoplastic sheathing material. The lining layer 54 is of high strength polypropylene fiber rope winding structure with a diameter of 2~4 mm.

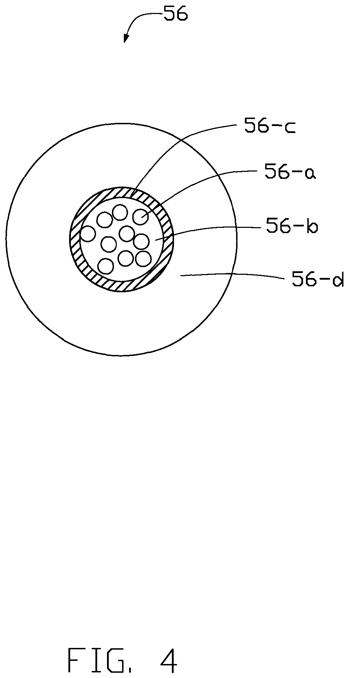

FIG. 3 and 4 illustrate that the single core submarine cable 100 includes a filling protective layer 55 and a fiber unit 56. The single core submarine cable 100 is an optoelectric composite cable. The filling protective layer 55 is positioned between the polyethylene protective layer 53 and the lining layer 54. The fiber unit 56 is positioned in gaps of the filling protective layer 55. The filling protective layer 55 is a cylinder formed by the continuous extrusion of high strength thermoplastic material, for filling and protecting the fiber unit 56. The fiber unit 56 carries optical signals in the single core marine cable 100. The fiber unit 56 includes a fiber 56-a, a water-resisting ointment 56-b, a stainless steel tube 56-c, and a plastic protective layer 56-d. The single core marine cable 100 includes two groups of fiber units 56. Each fiber unit 56 group includes 36 fibers.

In an alternative embodiment, the single core marine cable 100 includes one, three, or four groups of fiber units. Each group of fiber units 56 includes 1~36 fibers. The single core marine cable 100 may not include the fiber unit 56 and the filling protecting layer 55.

FIGS. 1 and 2 illustrate that the armor layer 30 includes first metal wires 31 and second metal wires 32 with a constant sum of number. The armor layer improves the mechanical strength and resistance to erosion and corrosion of the single core marine cable 100. The first metal wires 31 are round copper wires, aluminium wires or a combination thereof. The second metal wires 32 are round steel wires. The introduction of the first metal wires 31 reduces the resistance of the armor and electrical loss through the armor of the armor layer 30. The carrying capacity of the single core submarine cable 100 meets the requirements of rated current in specific routes. For example, the rated current required by the single core submarine cable 100 is 700A, the carrying capacity of the steel wire armored cable under certain routing conditions is 650A, and the carrying capacity of the copper wire armored cable under the same conditions is 850A. The single core submarine cable 100 combines two kinds of metal wires to improve the characteristics of the armor. By calculating the diameter and number of the metal wires, the ratio of number of the first metal wires 31 and the second metal wires 32 is 2:5. The carrying capacity of the single core submarine cable 100 including the first and second metal wires with ratio of 2:5 under the certain routing conditions is 710A, and this meets the requirements of rated current under those conditions.

The number of the first metal wires 31 and the second metal wires 32 is different between at least a first section and a second section. By adjusting the ratio of the number of the metal wires in different sections, the single core submarine cable 100 meets the requirements of rated current in multiple sections, and optimizes the mechanical strength and cost. For different laying areas and routing conditions, if the cable is prepared with high requirements for routing conditions of a bottleneck section, the carrying capacity of other sections will exceed the preset index. If the cable is prepared with requirements for routing conditions of other sections, the carrying capacity will not meet the high requirements for routing conditions of the bottleneck section. A submarine cable set up to meet high requirements for routing conditions of the bottleneck section has general mechanical performance and high cost. For example, it is assumed that the first section is laid under the routing conditions of other sections, and the second section is laid under the routing conditions of a bottleneck section. The rated current required for the single core submarine cable 100 is 700A, the carrying capacity of the first section of the single core submarine cable 100 is 720A, and the carrying capacity of the first section of the single core submarine cable 100 laid under the routing conditions of the second section is 630A. The carrying capacity of the first section of the single core submarine cable 100 laid under the routing conditions of the second section does not meet the rated current required, thus the second section of the route will be a bottleneck section of the route. Referring to the constant sum of the number, the number of the first wires on the second section is increased to improve the carrying capacity of the second section by joining the first wire 31 with the second wire 32, the carrying capacity of the first section of the single core submarine cable 100 laid under the routing conditions of the second section thus meet the rated current required. The single core submarine cable 100 is able to meet the requirements of rated currents in the first and second sections simultaneously. FIGS. 1 and 2 illustrate that the first metal wires 31 and the second metal wires 32 on the first and second sections are continuously arranged around the circumference of the inner protecting layer 20, cross sections of the first metal wires 31 and the second metal wires 32 are distributed a same circumference surface. The number of the first metal wires 31 and the second metal wires 32 is different between the first and second sections. The ratio of the number between the first section and the second section of the first wires 31 is 2:3, the ratio of the number between the first section and the second section of the second wires 32 is 5:4, the sum of the number of the first metal wires 31 and the second metal wires 32 always being constant. The carrying capacity of the first section can be 720A, and the carrying capacity of the second section can be 710A, both of which meet the preset rated current requirements of 700A. An outer protecting layer 40 is positioned outside of the armor layer 30, the outer protecting layer 40 provides mechanical protection and corrosion resistance to the armor layer 30, the outer protecting layer 40 is formed by wrapping the polypropylene fibers with diameter of 2~4 mm and coating with pitch or the like.

In an alternative embodiment, not covered by claims, the first metal wires 31 and the second metal wires 32 are flat wires. The first metal wires 31 are of aluminum or a combination of aluminum and copper. The number of the first metal wires 31 and the second metal wires 32 has more than two groups of different values on different sections of the single core submarine cable 100. To meet the requirements of rated current, the number of the first metal wires 31 is reduced and the number of the second metal wires 32 is increased to optimize mechanical strength and reduce cost of the single core submarine cable 100. The first metal wires 31 and the second metal wires 32 are arranged continuously but irregularly. The material of the outer protecting layer 40 can be polyethylene, polypropylene, polyvinylchloride, polyolefin, or a combination thereof.

The single core submarine cable of the present disclosure meets the requirements of rated current in multiple sections with different routing conditions, and optimizes the mechanical strength and cost.

The embodiments shown and described above are only examples. Many details in this field are found in the relevant art. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size, and arrangement of the parts within the principles of the present disclosure, up to and including the full extent established by the broad general meaning of the terms used in the claims. Therefore, those of ordinary skill in the art can make various modifications to the embodiments without departing from the scope of the disclosure, as defined by the appended claims.

## Claims

1. A single core submarine cable (100) comprising:
a cable core (10);
an inner protecting layer (20) positioned outside of the cable core (10); and
an armor layer (30) positioned outside of the inner protecting layer (20), wherein the single core submarine cable comprises a first section and a second section, **characterized in that**, the armor layer (30) comprises first metal wires (31) and second metal wires (32) with a constant sum of number in the first section and the second section of the single core submarine cable (100), the number of the first metal wires (31) and the second metal wires (32) is different between the first section and the second section, the first metal wires (31) and the second metal wires (32) on the first and second sections are continuously arranged around the circumference of the inner protecting layer (20), wherein the first metal wires (31) are copper wires, aluminium wires, or a combination thereof and the second wires (32) are steel wires.

2. The single core submarine cable (100) of claim 1, wherein both of the first metal wires (31) and the second metal wires (32) are round wires or flat wires.

3. The single core submarine cable (100) of claim 1, wherein the cable core (10) comprises a water-resistant conductor and a water-resistant filling material positioned in gaps of the water-resistant conductor.

4. The single core submarine cable (100) of claim 1, wherein the inner protecting layer (20) is positioned outside of the cable core (10), and comprises a conductor shielding layer (21), an insulation layer (22), an insulation shielding layer (23), and a first protective layer (50) arranged in that order from the inside to the outside.

5. The single core submarine cable (100) of claim 4, wherein the first protective layer (50) includes a water-resistant tape winding layer (51), a metal protective layer (52), a polyethylene protective layer (53), and a lining layer (54) arranged in that order from the inside to the outside.

6. The single core submarine cable (100) of claim 5, wherein a filling protective layer (55) is positioned between the polyethylene protective layer (53) and the lining layer (54), and a fiber unit (56) is positioned in the gaps of the filling protective layer (55).

7. The single core submarine cable (100) of claim 6, wherein the fiber unit (56) includes a fiber (56-a), a water-resisting ointment (56-b), a stainless steel tube (56-c), and a plastic protective layer (56-d).

8. The single core submarine cable (100) of claim 1, wherein an outer protecting layer (40) is positioned outside of the armor layer (30).

## Patentansprüche

1. Ein einadriges Unterseekabel (100) bestehend
aus: einem Unterseekabel (10);
einer inneren Schutzschicht (20), die außerhalb des Kabelkerns (10) angeordnet ist; und
einer außerhalb der inneren Schutzschicht (20) angeordneten Panzerungsschicht (30), wobei das einadrige Seekabel einen ersten Abschnitt und einen zweiten Abschnitt umfasst, **dadurch gekennzeichnet, dass** die Panzerungsschicht (30) erste Metalldrähte (31) und zweite Metalldrähte (32) umfasst, wobei die Summe der Anzahl dieser Drähte im ersten und zweiten Abschnitt des einadrigen Unterseekabels (100) konstant ist. Die Anzahl der ersten Metalldrähte (31) und der zweiten Metalldrähte (32) ist zwischen dem ersten und dem zweiten Abschnitt unterschiedlich, und die ersten Metalldrähte (31) sowie die zweiten Metalldrähte (32) sind im ersten und zweiten Abschnitt kontinuierlich um den Umfang der inneren Schutzschicht (20) angeordnet,
wobei die ersten Metalldrähte (31) Kupferdrähte, Aluminiumdrähte oder eine Kombination davon sind und die zweiten Drähte (32) Stahldrähte sind.

2. Das einadrige Unterseekabel (100) nach Anspruch 1, wobei sowohl die ersten Metalldrähte (31) als auch die zweiten Metalldrähte (32) Runddrähte oder Flachdrähte sind.

3. Einadriges Unterseekabel (100) nach Anspruch 1, wobei der Kabelkern (10) einen wasserfesten Leiter und ein wasserfestes Füllmaterial umfasst, das in den Zwischenräumen des wasserfesten Leiters angeordnet ist.

4. Das einadrige Unterseekabel (100) nach Anspruch 1, wobei die innere Schutzschicht (20) außerhalb des Kabelkerns (10) angeordnet ist und eine Leiterabschirmschicht (21), eine Isolationsschicht (22), eine Isolationsabschirmschicht (23) und eine erste Schutzschicht (50) umfasst, die in dieser Reihenfolge von innen nach außen angeordnet sind.

5. Das einadrige Unterseekabel (100) nach Anspruch 4, wobei die erste Schutzschicht (50) eine wasserfeste Bandwickelschicht (51), eine Metallschutzschicht (52), eine Polyethylenschutzschicht (53) und eine Auskleidungsschicht (54) umfasst, die in dieser Reihenfolge von innen nach außen angeordnet sind.

6. Das einadrige Unterseekabel (100) nach Anspruch 5, wobei eine Füllschutzschicht (55) zwischen der Polyethylen-Schutzschicht (53) und der Auskleidungsschicht (54) angeordnet ist und eine Fasereinheit (56) in den Lücken der Füllschutzschicht (55) angeordnet ist.

7. Das einadrige Unterseekabel (100) nach Anspruch 6, wobei die Fasereinheit (56) eine Faser (56-a), eine wasserabweisende Salbe (56-b), ein Edelstahlrohr (56-c) und eine Kunststoffschutzschicht (56-d) umfasst.

8. Das einadrige Unterseekabel (100) nach Anspruch 1, wobei eine äußere Schutzschicht (40) außerhalb der Panzerungsschicht (30) angeordnet ist.

## Revendications

1. un câble sous-marin à âme unique (100)
comprenant : une âme de câble (10) ;
une couche de protection intérieure (20) placée à l'extérieur de l'âme du câble (10) ; et
une couche d'armure (30) placée à l'extérieur de la couche de protection interne (20), dans laquelle le câble sous-marin à âme unique comprend une première section et une seconde section, **caractérisée par le fait que** la couche d'armure (30) comprend des premiers fils métalliques (31) et des seconds fils métalliques (32) avec une somme constante de nombre dans la première section et la seconde section du câble sous-marin à âme unique (100), le nombre de premiers fils métalliques (31) et de seconds fils métalliques (32) est différent entre la première et la seconde section, les premiers fils métalliques (31) et les seconds fils métalliques (32) sur la première et la seconde section sont disposés en continu sur la circonférence de la couche de protection interne (20),
dans laquelle les premiers fils métalliques (31) sont des fils de cuivre, des fils d'aluminium ou une combinaison de ceux-ci et les seconds fils (32) sont des fils d'acier.

2. Le câble sous-marin à âme unique (100) de la revendication 1, dans lequel les premiers fils métalliques (31) et les seconds fils métalliques (32) sont des fils ronds ou des fils plats.

3. Le câble sous-marin à âme unique (100) selon la revendication 1, dans lequel l'âme du câble (10) comprend un conducteur résistant à l'eau et un matériau de remplissage résistant à l'eau positionné dans les espaces du conducteur résistant à l'eau.

4. Le câble sous-marin à âme unique (100) selon la revendication 1, dans lequel la couche de protection interne (20) est positionnée à l'extérieur de l'âme du câble (10), et comprend une couche de blindage conducteur (21), une couche d'isolation (22), une couche de blindage d'isolation (23) et une première couche de protection (50) disposées dans cet ordre de l'intérieur vers l'extérieur.

5. Le câble sous-marin à âme unique (100) selon la revendication 4, dans lequel la première couche protectrice (50) comprend une couche d'enroulement de bande résistante à l'eau (51), une couche protectrice métallique (52), une couche protectrice en polyéthylène (53) et une couche de revêtement (54) disposées dans cet ordre de l'intérieur vers l'extérieur.

6. Le câble sous-marin à âme unique (100) selon la revendication 5, dans lequel une couche protectrice de remplissage (55) est positionnée entre la couche protectrice de polyéthylène (53) et la couche de revêtement (54), et une unité de fibre (56) est placée dans les interstices de la couche protectrice de remplissage (55).

7. Le câble sous-marin à âme unique (100) de la revendication 6, dans lequel l'unité de fibre (56) comprend une fibre (56-a), une pommade résistante à l'eau (56-b), un tube en acier inoxydable (56-c) et une couche de protection en plastique (56-d).

8. Le câble sous-marin à âme unique (100) de la revendication 1, dans lequel une couche de protection extérieure (40) est placée à l'extérieur de la couche d'armure (30).
